(19) Europäisches Patentamt / European Patent Office / Office européen des brevets

(11) **EP 3 423 294 B1**

(12) **EUROPEAN PATENT SPECIFICATION**

(45) Date of publication and mention
of the grant of the patent:
**06.01.2021 Bulletin 2021/01**

(51) Int Cl.:
***B60C 19/00*** (2006.01)

(21) Application number: **17709327.5**

(22) Date of filing: **27.02.2017**

(86) International application number:
**PCT/US2017/019655**

(87) International publication number:
**WO 2017/151491 (08.09.2017 Gazette 2017/36)**

(54) **SOUND ABSORBING STRUCTURE AND PNEUMATIC TIRE**

SCHALLABSORBIERENDE STRUKTUR UND LUFTREIFEN

STRUCTURE D'ABSORPTION ACOUSTIQUE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.02.2016 JP 2016037566**

(43) Date of publication of application:
**09.01.2019 Bulletin 2019/02**

(73) Proprietor: **3M Innovative Properties Company**
**St. Paul, MN 55133-3427 (US)**

(72) Inventor: **IMAI, Koji**
**Shinagawa-ku**
**Tokyo 141-8684 (JP)**

(74) Representative: **Mathys & Squire**
**Mathys & Squire Europe LLP**
**Theatinerstraße 7**
**80333 München (DE)**

(56) References cited:
**EP-A1- 2 302 620      EP-A1- 3 395 588**
**DE-A1-102015 117 856  US-A1- 2006 157 180**

**Description**

Technical Field

The present invention relates to a sound absorbing structure for use in a pneumatic tire, in particular to a pneumatic tire containing a sound absorbing structure, and more particularly to a method of absorbing sound from a pneumatic tire.

Background Art

In recent years, tires that include sound absorbing layers made from nonwoven fabric on an inner liner have become known (e.g. see Japanese Unexamined Patent Application Publication No. 2009-137568A).
US 2006/0157180 A describes a low noise pneumatic tire with a band-shaped porous sound absorbing material provided with a plurality of protrusions facing the tire inner cavity.
EP 2 302 620 A shows a sound absorbing structure which comprises a porous component made of a corrugated panel attached to a cover panel. This sound absorbing structure is intended to be mounted inside a tire.

Summary of Invention

When a vehicle provided with pneumatic tires travels, there are cases where column resonance sound may occur that has peaks of sound pressure in a plurality of frequency ranges corresponding to the circumferential length of the pneumatic tire. Conventionally, reducing this column resonance sound has been considered preferable, but from a practical perspective, it has been difficult to reduce the column resonance sound of certain frequencies (e.g. in the case of a pneumatic tire for a passenger vehicle, column resonance sound having peaks of sound pressure in the range of 200 Hz to 300 Hz).
In accordance with the present invention, a sound absorbing structure is operatively adapted (i.e., dimensioned, configured or otherwise designed) for being disposed in an interior of a pneumatic tire. The sound absorbing structure includes a sheet-like base material; a plurality of protrusions made from a nonwoven fabric and projecting from a front surface of the base material; and a hollow portion provided inside of the protrusions.
When this sound absorbing structure is disposed in the interior of a pneumatic tire and sound waves in the interior of the tire strike the protrusions, a portion of the sound waves passes through the nonwoven fabric of the protrusions and the energy of the sound waves is attenuated. Additionally, the portion of the sound waves that has passed through the nonwoven fabric reflects within the hollow portion, thereby promoting sonic interference. As a result, the energy of the sound waves is further attenuated. Thus, sound resonating at certain frequencies in the interior of a tire is suppressed. In this way, it is possible to effectively reduce column resonance sound of certain frequencies in a pneumatic tire.
In a sound absorbing structure according to one embodiment of the present invention, the base material is elongated; the protrusions extend along a crossing direction that is a direction crossing a longitudinal direction of the base material; the plurality of protrusions are juxtaposed along the longitudinal direction of the base material; and the hollow portion inside each of the plurality of protrusions extends along the crossing direction.
In another embodiment of the present invention, the sound absorbing structure is in the form of a corrugated structure.
In the sound absorbing structure according to the present invention, the plurality of protrusions forms a bellows shape.
In a sound absorbing structure according to another embodiment, a projecting height of the protrusions from the front surface of the base material can be in the range of from about 1 mm to about 50 mm; and a width dimension of the protrusions along the front surface of the base material can be in the range of from about 3 mm to about 100 mm.
In the present invention, a pneumatic tire is provided that includes a sound absorbing structure disposed on an inner surface of the pneumatic tire. In this pneumatic tire, the sound absorbing structure includes a sheet-like base material; a plurality of protrusions made from a nonwoven fabric and projecting from a front surface of the base material; and a hollow portion provided inside of the protrusions. In one embodiment, the sound absorbing structure in the pneumatic tire is in the form of a corrugated structure.
In a pneumatic tire according to another embodiment, the base material is elongated and disposed on the inner surface such that a longitudinal direction of the base material follows a circumferential direction of the pneumatic tire; the protrusions extend along a crossing direction that is a direction crossing a longitudinal direction of the base material; the plurality of protrusions are juxtaposed along the longitudinal direction of the base material; and the hollow portion inside each of the plurality of protrusions extends along the crossing direction.
In the present invention, a method is provided for absorbing sound from a pneumatic tire. The method comprises disposing the sound absorbing structure according to the present invention inside of a pneumatic tire. The method can further comprise mounting the pneumatic tire onto a rim, after the sound absorbing structure is disposed inside the pneumatic tire, to form a wheel. The method can further comprise mounting the wheel onto a vehicle. The vehicle can be an automobile (e.g., a passenger car, a bus, a truck, a mobile home, or a trailer).

According to the present invention, it is possible to effectively reduce column resonance sound of certain frequencies in a pneumatic tire.

Brief Description of Drawings

FIG. 1 is a perspective view of a sound absorbing structure according to an embodiment.
FIG. 2 is a cross-sectional view taken along line II-II of the sound absorbing structure of FIG. 1.
FIG. 3 is a schematic drawing illustrating a manufacturing method of the sound absorbing structure of FIG. 1.
FIGS. 4A and 4B are cross-sectional views of sound absorbing structures according to modified examples.
FIGS. 5A and 5B are cross-sectional views of sound absorbing structures according to other modified examples.
FIGS. 6A and 6B are cross-sectional views of sound absorbing structures according to other modified examples not forming part of the present invention.
FIGS. 7A and 7B are cross-sectional views of sound absorbing structures according to other modified examples not forming part of the present invention.
FIG. 8A is a perspective view of a pneumatic tire according to an embodiment. FIG. 8B is an enlarged drawing of the sound absorbing structure of FIG. 8A.

Description of Embodiments

Embodiments of the present invention are described below with reference to the attached drawings. In the following description, the same or corresponding elements are given the same reference numeral, and redundant explanations are omitted.

In the present specification, the term "pneumatic tire" refers to a tire which is used by filling an inner space, which is airtight in a use state, with air or the like. The term "use state" refers to a state where the inner space is placed in an airtight state by mounting the bead portions of the pneumatic tire on the rim of a wheel. The phrase "interior of the pneumatic tire" includes an inner surface of the pneumatic tire and the inner space of the pneumatic tire. The term "inner surface" refers to a surface, among the surfaces of the pneumatic tire, corresponding to the back surfaces of the tread portion and the sidewall portions. The term "inner space" refers to space surrounded by the inner surface of the pneumatic tire or, in other words, space enclosed by mounting the bead portions of the pneumatic tire on the rim of a wheel.

**Configuration of Sound Absorbing Structure 1**

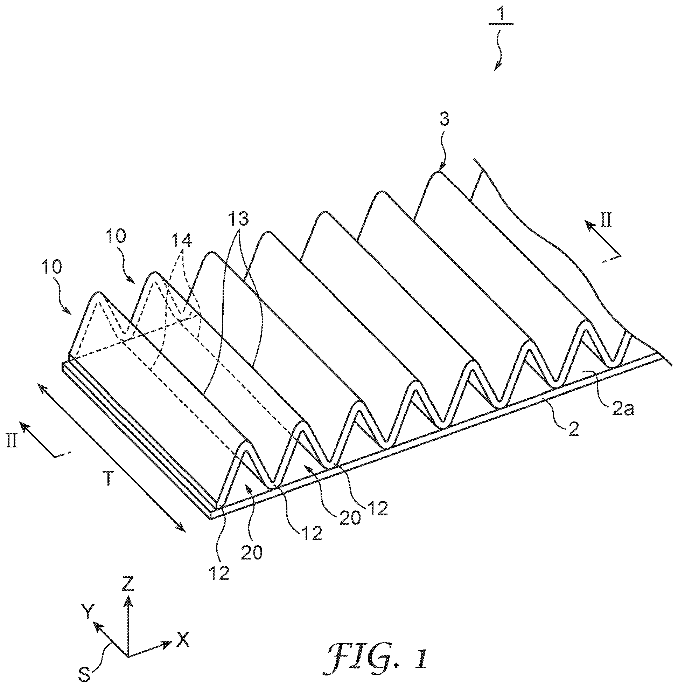

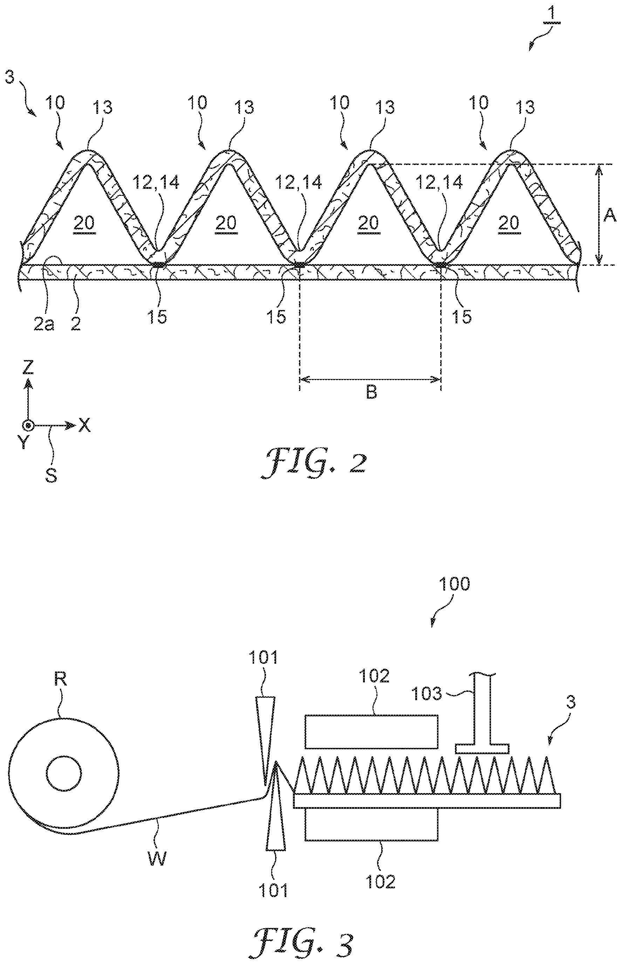

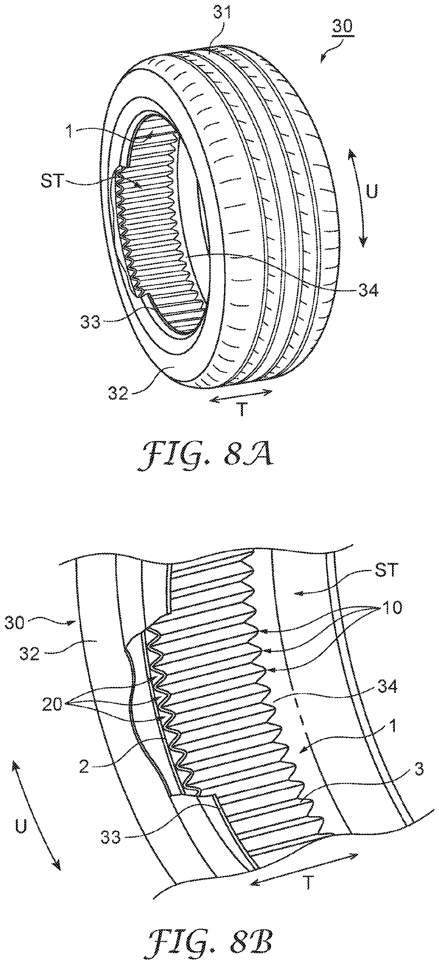

A sound absorbing structure 1 is used by being disposed in an interior of a pneumatic tire 30 in order to reduce column resonance sound of certain frequencies in a pneumatic tire 30 (see FIG. 8). As illustrated in FIGS. 1 and 2, the sound absorbing structure 1 includes a sheet-like base material 2; a plurality of protrusions 10 made from a nonwoven fabric and projecting from a front surface 2a of the base material 2; and a hollow portion 20 provided inside of the protrusions 10. Note that a Cartesian coordinate system S is illustrated in FIGS. 1, 2, and 4 to 7. The X-direction of the Cartesian coordinate system S represents a longitudinal direction of the base material 2, the Y-direction represents a direction crossing the longitudinal direction of the base material 2, namely a crossing direction, and the Z-direction represents a normal direction of the base material 2.

The base material 2 is an elongated sheet member (backing) that is installed in the pneumatic tire 30 and that supports the protrusions 10. In consideration of durability and flexibility, the base material 2 may be formed from a woven fabric or a nonwoven fabric (e.g. spunbond or similar long fibers). In consideration of conformability to the pneumatic tire 30 when the sound absorbing structure 1 is disposed and used on an inner surface 34 (see FIG. 8) of the pneumatic tire 30, a thickness of the base material 2 may be about 2.0 mm or less, about 1 mm or less, or about 0.5 mm or less. A weight per unit area of the base material 2 is not particularly limited but, for example, may be about 100 $g/m^2$ or less or 60 $g/m^2$ or less. An adhesive layer (e.g. double-sided adhesive tape, not illustrated) for bonding the base material 2 to the pneumatic tire 30 may be laminated on the back surface of the base material 2.

A range of width of the base material 2 is not particularly limited but, as a ratio with respect to a width of a tread portion 31 of the pneumatic tire 30 (described later in detail; hereinafter also referred to simply as "tread width"), may be from 5% to 80%, from 5% to 60%, or from 5% to 50%. As an example, when the tread width is 175 mm, the range of width of the base material 2 may be from 8.75 mm to 140 mm, from 8.75 mm to 105 mm, or from 8.75 mm to 87.5 mm.

The protrusions 10 are members for reducing the column resonance sound in the pneumatic tire 30. The protrusions 10 are formed from a sheet member 3 made from a nonwoven fabric that is folded into a bellows shape, and form a pleated (ruffled) shape. That is, the protrusions 10 are a mountainous portion of peaks and valleys that alternately repeat along the longitudinal direction of the base material 2. Additionally, portions that connect space between adjacent protrusions 10 and that are fixed to the front surface of the base material 2 are valley portions 12.

The protrusions 10 have a ridge line 13 indicating the peak portion, and the each of the valley portions 12 has a valley line 14 indicating the valley portion. The ridge line 13 and the valley line 14 extend so as to be orthogonal to the longitudinal direction of the base material 2. In the present embodiment, the extending direction of the ridge line 13 is an extending direction T of the protrusions 10, and the extending direction T of the protrusions 10 is orthogonal to the longitudinal direction of the base material 2. In the present embodiment, a crossing direction of the extending direction T of the protrusions 10 with the longitudinal direction of the base material 2 is orthogonal, but need not be orthogonal and any non-parallel form is possible. Additionally, the portions where the valley line 14 are formed are not limited to cases where sharp creases are formed, and these portions may have a curved form.

A width of the protrusions 10, that is, a length in the extending direction of the protrusions 10 may be the same as the width of the base material 2 or may be narrower than the width of the base material 2. A range of width of the protrusions 10 is not particularly limited but, as a ratio with respect to the tread width of the pneumatic tire 30, may be 5% or greater, 10% or greater, or 20% or greater and 80% or less, 60% or less, or 50% or less. As an example, when the tread width of the pneumatic tire 30 is 175 mm, the range of width of the protrusions 10 may be about 9 mm or greater, about 18 mm or greater, or about 36 mm or greater and about 140 mm or less, about 105 mm or less, or about 88 mm or less.

The hollow portion 20 is formed inside the protrusions 10. The hollow portion 20 is space formed by the front surface 2a of the base material 2 and the sheet member 3 constituting the protrusions 10. The hollow portion 20 extends along the extending direction T of the protrusions 10. This extending direction T is a crossing direction orthogonal to the longitudinal direction of the base material 2. That is, the hollow portion 20 extends along the crossing direction inside each of the plurality of protrusions 10. Additionally, in the present embodiment, gradient angles of the sheet member 3 of each of the valley portions 12 that sandwich the protrusion 10 of one of the protrusions 10 are configured to be substantially equal. As such, a cross-sectional shape in the Z-X plane of the hollow portion 20 is substantially an isosceles triangle shape having the protrusion 10 side as a vertex.

In this specification, a projecting height of the protrusions 10 from the front surface 2a of the base material 2 (hereinafter also referred to simply as "projecting height") refers to the height of the hollow portion 20. In other words, as illustrated in FIG. 2, the projecting height of the protrusions 10 is a height from the front surface 2a of the base material 2 to a highest position of the hollow portion 20 and, specifically is a height from the front surface 2a of the base material 2 to a position of a back side of the ridge line 13. A range of projecting height of the protrusions 10 is not particularly limited and may be from 1 mm to 50 mm, preferably may be from 2 mm to 40 mm, and more preferably may be from 5 mm to 30 mm. By configuring the projecting height of the protrusions 10 to be 1 mm or greater, effects of reducing column resonance sound can be obtained. Additionally, by configuring the projecting height to be 50 mm or less, when, for example, mounting the tire on a wheel, a tire lever or similar jig that is inserted into the tire will not easily contact the protrusions 10 and obstacles to mounting work can be avoided. The projecting height of the protrusions 10 may be substantially constant for all of the protrusions 10, or may be different for each of the protrusions 10. In the present embodiment, the projecting height of the protrusions 10 is substantially constant for all of the protrusions 10.

In this specification, a width dimension of the protrusions 10 along the front surface 2a of the base material 2 (hereinafter also referred to simply as "pitch") refers to the pitch of the hollow portion 20. That is, as illustrated in FIG. 2, the pitch of the protrusions 10 is a distance along the front surface 2a of the base material 2 between a pair of valley portions 12 of one of the protrusions 10. A range of pitch of the protrusions 10 is not particularly limited and may be from 3 mm to 100 mm, preferably may be from 4 mm to 50 mm, and more preferably may be from 5 mm to 30 mm. In the present embodiment, a pitch B of the protrusions 10 is about 20 mm. The pitch of the protrusions 10 may be substantially constant for all of the protrusions 10, or may be different for each of the protrusions 10. In the present embodiment, the pitch of the protrusions 10 is substantially constant for all of the protrusions 10.

An angle of the protrusions 10 with respect to the front surface 2a of the base material 2, that is, a gradient angle of the sheet member 3 forming the protrusions 10 is not particularly limited, and the angles of the plurality of protrusions 10 may be substantially equal or may be different from each other. In the present embodiment, taking one of the protrusions 10 into consideration, the gradient angles of the sheet member 3 of each of the valley portions 12 that sandwich the protrusion 10 are configured to be substantially equal.

The protrusions 10 may further include one or more reinforcing layers (not illustrated) for reinforcement. For example, the reinforcement layer may be laminated on one surface or on both surfaces of the protrusions 10. The reinforcement layer may be constituted from a scrim layer, a mesh layer, or the like, for example. A scrim layer is a woven fabric or nonwoven fabric reinforcing material produced, for example, from fibers. Examples of a material of the scrim layer include nylon, polyester, fiber glass, and the like, but the material is not limited hereto. An average thickness of the scrim layer is not particularly limited but is in a range of, for example, from 25 $\mu$m to 1000 $\mu$m, and preferably from 25 $\mu$m to 500 $\mu$m. The scrim layer may be bonded so as to follow the protrusions 10. Examples of a material of the mesh layer include mesh sheets of polypropylene, polyester, EVA, nylon, or the like, but the material is not limited hereto. An average thickness of the mesh layer is not particularly limited but is in a range of, for example, from 0.1 mm to 3 mm, and preferably from 0.1 mm to 2 mm. These reinforcing layers may be bonded so as to follow the protrusions 10 using various adhesives or a method such as thermal fusion or the like.

The sheet member 3 of the protrusions 10 is bonded to the base material 2 via an adhesive portion 15 at each of the valley portions 12. Examples of the adhesive portion 15 include a hot melt type resin that melt bonds due to heat, and portions welded by ultrasonic waves. A nonwoven fabric made from resin fibers having a melting point lower than the melting point of the base material 2 and the protrusions 10 may be used as the adhesive portion 15. Such a resin or resin fiber composition may be a polyester based, polyolefin based, polyurethane based, polyacrylic based, or similar resin. Note that the bonding between the base material 2 and the protrusions 10 may be physical bonding obtained by hot pressing or needling the base material 2 and the protrusions 10. Thus, the sheet member 3 is fixed to the base material 2 and, as such, for example, even if centrifugal force caused by rotation of the pneumatic tire 30 acts on the sound absorbing structure 1 that is disposed in the pneumatic tire 30, the three-dimensional shape formed by the plurality of protrusions 10 will be suitably maintained.

The hollow portion 20 formed inside the protrusions 10 is space formed by the front surface 2a of the base material 2 and the sheet member 3 constituting the protrusions 10. The hollow portion 20 extends along the extending direction T of the protrusions 10. This extending direction T is a crossing direction orthogonal to the longitudinal direction of the base material 2. That is, the hollow portion 20 extends along the crossing direction inside each of the plurality of protrusions 10. Additionally, in the present embodiment, gradient angles of the sheet member 3 of each of the valley portions 12 that sandwich the protrusion 10 of one of the protrusions 10 are configured to be substantially equal. As such, a cross-sectional shape in the Z-X plane of the hollow portion 20 is substantially an isosceles triangle shape having the protrusion 10 side as a vertex.

**Material of Sheet Member 3 of Protrusions 10**

The sheet member 3 of the protrusions 10 is constituted by a web of nonwoven fabric. The term "web" refers to an article formed by, for example, linking or entangling fibers. The nonwoven fabric may be a single layer or may be multiple layers, and may be selected in accordance with the effects of reducing column resonance sound in the pneumatic tire, the space in the interior of the pneumatic tire, or the like. A thickness of the nonwoven fabric is not particularly limited but, for example, may be 15 mm or less. In consideration of the ease of bending the nonwoven fabric to form the protrusions 10 as described later, the thickness of the nonwoven fabric may be 12 mm or less.

A range of weight per unit area of the web (hereinafter also referred to as "unit weight") is not particularly limited, but may be from 10 g/m$^2$ to 600 g/m$^2$, preferably may be from 20 g/m$^2$ to 400 g/m$^2$, and more preferably may be from 50 g/m$^2$ to 200 g/m$^2$. By configuring the unit weight to be 10 g/m$^2$ or greater, effects of reducing column resonance sound can be effectively demonstrated. Additionally, by configuring the unit weight to be 600 g/m$^2$ or less, increases in the total weight of the tire caused by the mounting of the web can be prevented from affecting the balance when rotating.

For example, the web can be manufactured by carding, air laying, wet laying, spun lace, spun bond, or electrospinning methods; melt spun, melt blown, or similar melt blown methods; or combinations thereof. Typically, spun bond fiber is a small diameter fiber formed by extruding melted thermoplastic polymer as a filament from narrow and normally round capillaries of a plurality of spinnerets that have the diameter of the fiber to be extruded, and causing the extruded filament to rapidly shrink. Of fibers that are formed in thread shapes (or filament shapes) by melting a thermoplastic material and using a die (mold), the term "melt blown fiber" particularly refers to narrow fiber (microfiber) that is extruded in the flow of a high speed gas (e.g. air). The web may be produced from a single fiber or two or more fibers for which the type of thermoplastic polymer and/or the thickness is different.

The web may include staple fiber as a binder fiber. The term "binder fiber" refers to short fiber that fulfills the role of a binder for linking (e.g. linking by fusion) the fibers. When the web includes the stable fiber, there is a tendency for the web to have increased bulk and lower density compared to webs consisting only of blown microfiber. The web preferably includes about 20 wt% or less of the staple fiber, and more preferably includes about 10 wt% or less of the staple fiber. An example of a web including staple fiber is described in US Patent No. 4118531 (Hauser).

In cases where calculating using the method described in Davies, C.N., The Separation of Airborne Dust and Particles, Institution of Mechanical Engineers, London, Proceedings 1B, 1952, typically, the microfiber of the web has an effective fiber length of about 0.5 $\mu$m to 15 $\mu$m, and preferably about 1 $\mu$m to 6 $\mu$m. A minimum tensile strength of the web is, for example, about 4.0 N.

Bulk of the web is measured in terms of solidity. Here, the term "solidity" refers to a fraction of a non-unit represented as $\alpha$, for example, as shown in the following formula. Lower solidity values indicate greater bulk of the web. The solidity of the web is, for example, from 0.5% to 30%, and preferably is from 1% to 25%.

$$\alpha = mf/\rho f \times Lnv$$

In the formula,
mf: fiber mass per sample surface area,
pf: fiber density, and
Lnv: thickness of web.

The material of the web is preferably a material having an average pore size of 1 $\mu$m to 40 $\mu$m, and preferably from 2 $\mu$m to 20 $\mu$m. The average pore size may be measured in accordance with ASTM F 316-03 Standard Test Methods for Pore Size Characteristics of Membrane Filters, by Bubble Point and Mean Flow Pore Test Method B, and using Freon TF™ as a test fluid.

The material of the web may be a thermoplastic polymer material. Examples of the thermoplastic polymer material include polyolefins, poly(isoprene), poly(butadiene), fluorinated polymers, chlorinated polymers, polyamides, polyimides, polyethers, poly(ether sulfones), poly(sulfone), poly(vinyl acetate), copolymers of vinyl acetate (e.g. poly(ethylene)-co-poly(vinyl alcohol)), poly(phosphazene), poly(vinyl ester), poly(vinyl ether), poly(vinyl alcohol), polyethylene terephthalate, polybutylene terephthalate, polyethylene naphthalate, and similar polyesters or rayons or the like, poly(carbonate), and acrylonitrile, but are not limited hereto.

Examples of preferable polyolefins include poly(ethylene), poly(propylene), poly (1-butene), copolymers of ethylene and propylene, $\alpha$-olefin copolymers (e.g. copolymers of 1-butene, 1-hexene, 1-octene, and 1-decene with ethylene or propylene), poly(ethylene-co-1-butene), and poly(ethylene-co-1-butene-co-1-hexene), but are not limited hereto.

Examples of preferable fluorinated polymers include poly(vinyl fluoride), poly(vinylidene fluoride), copolymers of vinylidene fluoride (such as poly(vinylidene fluoride-co-hexafluoropropylene)), and copolymers of chlorotrifluoroethylene (e.g. poly(ethylene-co-chlorotrifluoroethylene)), but are not limited hereto.

Examples of preferable polyamides include nylon 6, nylon 6,6, nylon 6,12, poly(iminoadipoyliminohexamethylene), poly(iminoadipoyliminodecamethylene), and polycaprolactam, but are not limited hereto. Examples of preferable polyimides include poly(pyromellitimide).

Examples of preferable poly(ether sulfones) include poly(diphenyl ether sulfone) and poly(diphenyl sulfone-co-diphenylene oxide sulfone), but are not limited hereto.

Examples of preferable copolymers of vinyl acetate include poly(ethylene-co-vinyl acetate), and copolymers, for which at least a portion of the acetate groups is hydrolyzed, that provide various poly(vinyl alcohols) such as poly(ethylene-co-vinyl alcohol), but are not limited hereto.

**Manufacturing Method of Sound Absorbing Structure 1**

The sound absorbing structure 1 can be manufactured using a pleating machine 100 such as that illustrated in FIG. 3, for example. The pleating machine 100 continuously manufactures the sheet member 3 from a strip-like nonwoven fabric web W. One example of the pleating machine 100 is a reciprocating device provided with a pair of blades 101 capable of reciprocating in a thickness direction of the nonwoven fabric web W, a heater 102 disposed so as to vertically sandwich the nonwoven fabric web W, and a back presser 103 that adjusts the shape of the nonwoven fabric web W. With the pleating machine 100, a transport roller (not illustrated) that transports the nonwoven fabric web W may be disposed between a roll R and the pleating machine 100.

First, the nonwoven fabric web W is fed to the pleating machine 100 from the roll R formed by winding the nonwoven fabric web W. Then, the pair of blades 101 is pressed against the fed nonwoven fabric web W from both sides in the thickness direction, and form creases that alternately repeat in the nonwoven fabric web W (pleating). The pleated nonwoven fabric web W is heated from above and below the nonwoven fabric web W by the heater 102 and, thereafter, the shape is adjusted by the back presser 103. A configuration is possible in which, instead of pressing the pair of blades 101 against the nonwoven fabric web W, the nonwoven fabric web W is sandwiched from both sides in the thickness direction of the nonwoven fabric web W by a pair of gears that mate with each other, and peaks and valleys that alternately repeat along the longitudinal direction of the nonwoven fabric web W are formed in the nonwoven fabric web W.

Configuration of a Sound Absorbing Structure According to Other Embodiments

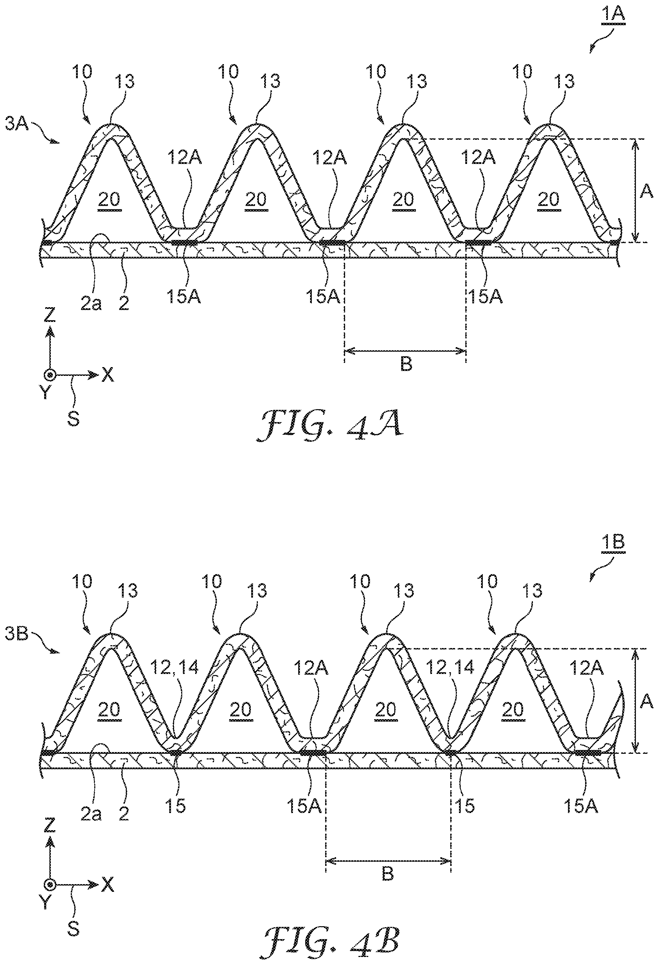

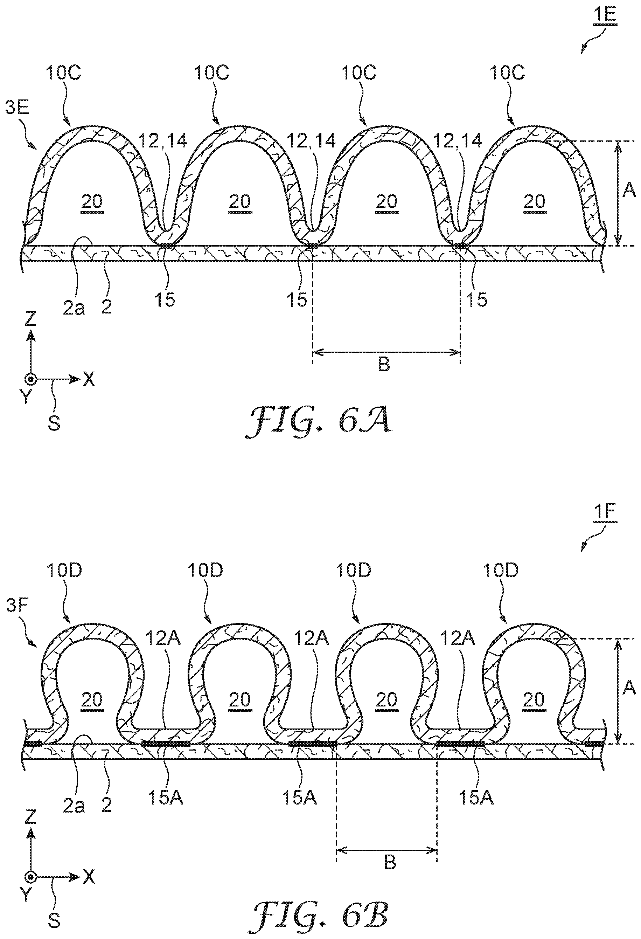

Various modifications can be applied to the shape of the sheet member 3 of the sound absorbing structure 1. For example, the shape and projecting height A of the protrusions 10, the length of the adhesive portion 15, and the like can be changed depending on the location. Specific sound absorbing structures according to other embodiments are described while referring to FIGS. 4 to 7, wherein FIGS. 6 to 7 represent sound absorbing structure not forming part of the invention.

As illustrated in FIG. 4A, a sound absorbing structure 1A differs from the sound absorbing structure 1 in that in the sound absorbing structure 1A, a wide valley portion 12A is formed in a sheet member 3A instead of the valley portion 12 formed with a sharp crease (valley line). In the sound absorbing structure 1A, the valley portion 12A has a spread of a predetermined length along the front surface 2a of the base material 2 and, as such, bonding length of an adhesive portion 15A is longer than that of the adhesive portion 15. Therefore, according to the sound absorbing structure 1A, the sheet member 3A can be fixed to the base material 2 in a stronger manner, and the three-dimensional shape formed by the plurality of protrusions 10 can be more reliably maintained.

As illustrated in FIG. 4B, a sound absorbing structure 1B is provided with both the valley portion 12 and the valley portion 12A that are described above. Moreover, the sound absorbing structure 1B differs from the sound absorbing structure 1 and the sound absorbing structure 1A in that the valley portion 12 and the valley portion 12A are formed so as to alternately repeat along the longitudinal direction of the base material 2. According to the sound absorbing structure 1B, the strength by which a sheet member 3B is fixed to the base material 2 can be increased while suppressing increases in the amount of the sheet member 3 and the amount of resin or the like used for the adhesive portion 15.

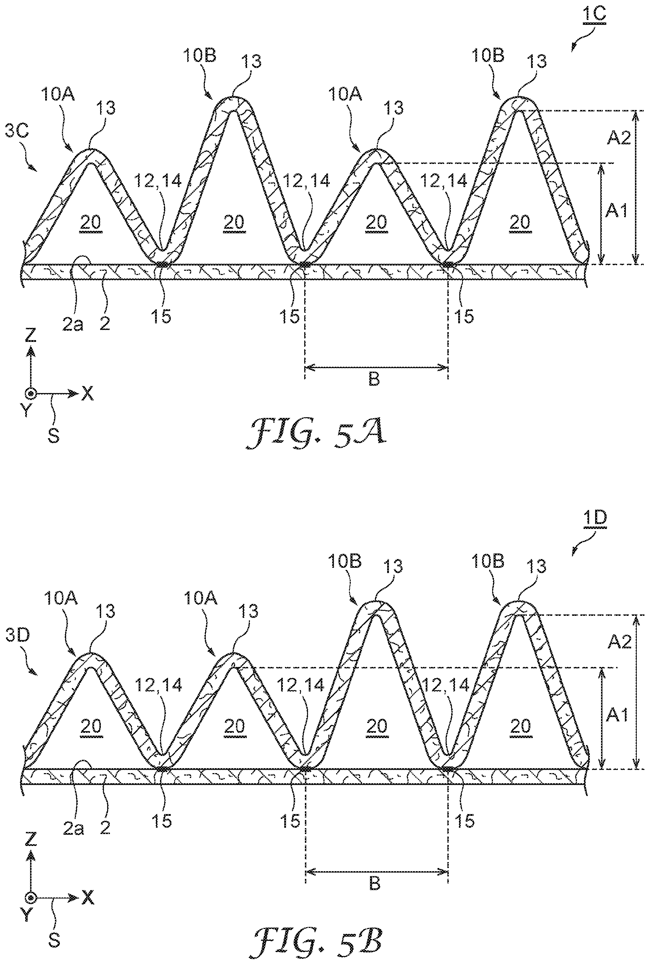

As illustrated in FIG. 5A, a sound absorbing structure 1C differs from the sound absorbing structure 1 in that a plurality of protrusions 10A and a plurality of protrusions 10B having different projecting heights are provided. Specifically, the plurality of protrusions 10A projecting from the front surface 2a of the base material 2 at a projecting height A1 and the plurality of protrusions 10B projecting from the front surface 2a of the base material 2 at a projecting height A2 are formed in a sheet member 3C so as to alternately repeat along the longitudinal direction of the base material 2. Additionally, as illustrated in FIG. 5B, a sound absorbing structure 1D differs from the sound absorbing structure 1C in that the protrusions 10A and the protrusions 10B are configured as sets of two, and each set is formed in a sheet member 3D so as to alternately repeat along the longitudinal direction of the base material 2. With the sound absorbing structures 1C and 1D, the projecting heights of the protrusions 10A and the protrusions 10B differ from each other. As such, the attenuation of the sonic energy caused by sound waves striking the protrusions 10A and the attenuation of the sonic energy caused by sound waves striking the protrusions 10B become compound. As a result, it is possible to change the characteristics whereby the sound absorbing structure 1 reduces column resonance sound.

As illustrated in FIG. 6A, a sound absorbing structure 1E differs from the sound absorbing structure 1 in that instead of the sharp creases (ridge lines), protrusions 10C formed with curved surfaces are provided. A plurality of protrusions 10C is provided along the longitudinal direction of the base material 2. Additionally, as illustrated in FIG. 6B, a sound absorbing structure 1F differs from the sound absorbing structure 1 in that instead of the sharp creases (ridge lines), protrusions 10D formed with curved surfaces are provided. A plurality of the protrusions 10D is provided along the longitudinal direction of the base material 2. Additionally, in the sound absorbing structure IF, the valley portion 12A has a spread of a predetermined length along the front surface 2a of the base material 2 and, as such, bonding length of the adhesive portion 15A is longer than that of the adhesive portion 15. Therefore, according to the sound absorbing structure 1A, the sheet member 3A can be fixed to the base material 2 in a stronger manner, and the three-dimensional shape formed by the plurality of protrusions 10D can be more reliably maintained.

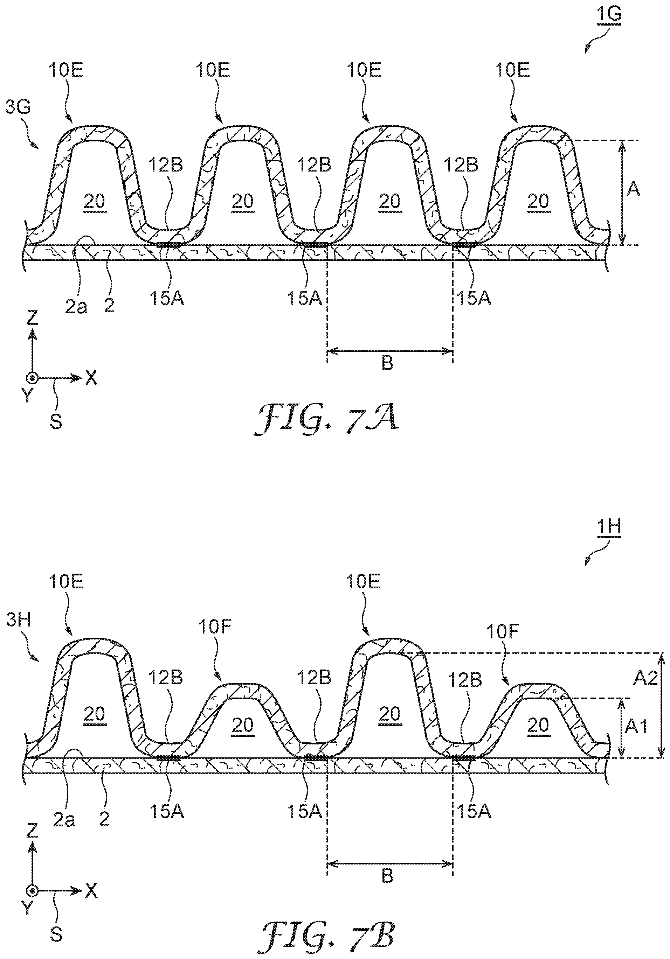

As illustrated in FIG. 7A, a sound absorbing structure 1G differs from the sound absorbing structure 1 in that protrusions 10E that have a rectangular (hat) shaped cross-section are provided. The protrusions 10E are formed in a sheet member 3G so as to alternately repeat along the longitudinal direction of the base material 2. In the sound absorbing structure 1G, the valley portion 12B extends a predetermined length along the front surface 2a of the base material 2 and, as such, bonding length of the adhesive portion 15A is longer than that of the adhesive portion 15. For example, instead of pressing the pair of blades 101 against the nonwoven fabric web W in the pleating machine 100 described above, the protrusions 10E can be formed by using a pair of gears that mate with each other to sandwich the nonwoven fabric web W from both sides in the thickness direction of the nonwoven fabric web W.

As illustrated in FIG. 7B, a sound absorbing structure 1H differs from the sound absorbing structure 1G in that the protrusions 10E and protrusions 10F are formed in a sheet member 3G so as to alternately repeat along the longitudinal direction of the base material 2. The protrusions 10F are obtained by forming creases with a hat-shaped cross-section in the protrusions 10B and the valley portions 12B, and protrude from the front surface 2a of the base material 2 at a projecting height A1. With the sound absorbing structure 1H, the projecting heights of the protrusions 10E and the protrusions 10F differ from each other. As such, the attenuation of the sonic energy caused by sound waves striking the protrusions 10E and the attenuation of the sonic energy caused by sound waves striking the protrusions 10F become compound. As a result, it is possible to change the characteristics whereby the sound absorbing structure 1 reduces column resonance sound.

## Configuration of Pneumatic Tire 30

The configuration of the pneumatic tire 30 according to the present embodiment will be described while referring to FIGS. 8A and 8B. In FIG. 8A, arrow U indicates the circumferential direction of the pneumatic tire 30 (hereinafter also referred to as "circumferential direction U").

The pneumatic tire 30 is not particularly limited but, in the present embodiment, is a tubeless radial tire for a passenger vehicle. The pneumatic tire 30 may be of a form used for passenger vehicles where quietness in the cabin is strongly desired, or may be a tire for a variety of uses such as for a truck, a motorcycle, an aircraft, a bicycle, a rear car, or the like. Additionally, the pneumatic tire 30 may be a bias tire.

The pneumatic tire 30 forms a substantially annular shape and includes a tread portion 31 that is a portion that contacts the road surface, a pair of sidewall portions 32 extending inward in the tire radial direction from both edges of the tread portion 31, and a pair of bead portions 33 provided on inner edges of the sidewall portions 32.

The pneumatic tire 30 includes an inner space ST surrounded by an inner surface 34. The inner surface 34 is a surface of an inner side of the pneumatic tire 30 facing the inner space ST, and corresponds to back surfaces of the tread portion 31 and the sidewall portions 32. The inner space ST is made airtight by mounting the bead portions 33 on the rim of a wheel (not illustrated). The pneumatic tire 30 is used by filling the airtight inner space ST with air or the like.

The pneumatic tire 30 is reinforced by a radial structure carcass and belt layers provided in the interior of the tread portion 31. The carcass may have a commonly known configuration. The carcass is constituted by one or more carcass plies in which, for example, organic fiber cords are used. The belt layer may have a commonly known configuration. The belt layer is constituted from one or more belt plies. In the belt layer, steel cords are arranged inclined at a predetermined angle with respect to the circumferential direction U, and the steel cords are overlapped in directions that cross each other.

A width (tread width) of the tread portion 31 of the pneumatic tire 30 is not particularly limited, but may be a width of from 60 mm to 315 mm. The term "tread width" means the width of the portion where the pneumatic tire 30 contacts the road surface in a cross-sectional view including the center axis of the pneumatic tire 30. The tread width is not limited to the width of the tread portion 31 actually measured, and may be a width dimension given in terms of standard designation. In the present embodiment, an example is given in which the tread width is 195 mm.

An inner diameter of the pneumatic tire 30 is not particularly limited, and may be from 3 inches to 22.5 inches (76.2 mm to 571.5 mm). The term "inner diameter" of the pneumatic tire 30 refers to a diameter corresponding to an outer diameter (rim diameter) of a rim on which the pneumatic tire 30 can be mounted. The inner diameter of the pneumatic tire 30 is not limited to the inner diameter of the pneumatic tire 30 actually measured, and may be the rim diameter given in terms of standard designation. In the present embodiment, an example is given in which the rim diameter is 16 inches (406.4 mm).

An aspect ratio of the pneumatic tire 30 is not particularly limited, and may be from an aspect ratio of from 25% to 82%. The term "aspect ratio" refers to a numerical value that represents a ratio of the cross-sectional height of the sidewall portions 32 to the cross-sectional width of the tread portion 31 in a cross-sectional view including the center axis of the pneumatic tire 30.

The sound absorbing structure 1 is disposed on the inner surface 34 of the pneumatic tire 30. In the present embodiment, the sound absorbing structure 1 is disposed at a location on the inner surface 34 corresponding to the back surface of the tread portion 31. In another embodiment, the sound absorbing structure 1 may be disposed at a location on the inner surface 34 corresponding to the back surfaces of the sidewall portions 32. For example, after being manufactured planarly as illustrated in FIG. 1, the sound absorbing structure 1 is made to curve in an arcuate shape in the circumferential direction U so as to follow the inner surface 34 of the pneumatic tire 30, and is fixed to the inner surface 34 by an adhesive layer provided on the back surface of the base material 2. In other words, the base material 2 of the sound absorbing structure 1 is disposed on the inner surface 34 such that the longitudinal direction of the base material 2 follows the circumferential direction U. Means for fixing the sound absorbing structure 1 to the inner surface 34 are not particularly limited and examples thereof include physical fixing methods in which adhesion, heat welding, surface fastening, clamping, and the like using double-sided adhesive tape, adhesives, or the like are used.

The sound absorbing structure 1 may be disposed on the inner surface 34 of the pneumatic tire 30 so as to be continuous in the circumferential direction U. A plurality of sound absorbing structures 1 may be disposed intermittently in the circumferential direction U on the inner surface 34 of the pneumatic tire 30. A plurality of sound absorbing structures 1 may be disposed intermittently in the circumferential direction U on the inner surface 34 of the pneumatic tire 30. The sound absorbing structures 1 disposed in the circumferential direction U may be disposed in parallel so as to form a plurality of rows in the tire axial direction.

A description has been given of various sound absorbing structures of the present embodiment, and this description has also included modified examples. In all cases, the following effects and benefits are provided. The sound absorbing structure 1 will be described as representative of the various sound absorbing structures 1 described herein.

In the sound absorbing structure 1 and the pneumatic tire 30, the plurality of protrusions 10 made from nonwoven fabric projects from the front surface 2a of the base material 2. The hollow portion 20 is formed inside of each of the plurality of protrusions 10. In cases where the sound absorbing structure 1 is used by being disposed in the interior of the pneumatic tire 30, when sound waves strike the protrusions 10 in the interior of the pneumatic tire 30, a portion of the sound waves passes through the nonwoven fabric of the protrusions 10 and the energy thereof is attenuated. Additionally, in the hollow portion 20, a portion of the sound waves is reflected by the base material 2 or the nonwoven fabric of the protrusions 10, thereby promoting sonic interference. As a result, the energy of the sound waves is further attenuated. Thus, sound resonating at certain frequencies in the interior of the pneumatic tire 30 is suppressed. As a result, it is possible to effectively reduce column resonance sound of certain frequencies in the pneumatic tire 30.

Additionally, in the sound absorbing structure 1, the base material 2 has an elongated shape and the protrusions 10 extend along the crossing direction, which is a direction orthogonal to the longitudinal direction of the base material 2. The plurality of protrusions 10 are juxtaposed along the longitudinal direction of the base material 2. Moreover, the hollow portion 20 extends along the crossing direction inside each of the plurality of protrusions 10. As a result, when disposing the sound absorbing structure 1 on the inner surface 34 of the pneumatic tire 30, it is easier to make the base material 2 follow the circumferential direction U, and the sound absorbing structure 1 can be disposed such that sound waves in the inner space ST of the pneumatic tire 30 appropriately strike the protrusions 10.

In the sound absorbing structure 1, the plurality of protrusions forms a bellows shape. As a result, when disposing the sound absorbing structure 1 on the inner surface 34 of the pneumatic tire 30, bending stress occurring in the sound absorbing structure 1 can be suppressed even if the sound absorbing structure 1 is made to curve in the circumferential direction U.

In the sound absorbing structure 1, the projecting height of the protrusions from the front surface 2a of the base material is preferably from 1 mm to 50 mm; and a width dimension of the protrusions along the front surface 2a of the base material is preferably from 3 mm to 100 mm.

## Modified Examples

Embodiments of the present invention were described above, but the present invention is not limited to the abovementioned embodiments. For example, an example of a configuration was given in which the protrusions 10 extended along a direction orthogonal to the longitudinal direction of the base material 2, but extending along a direction orthogonal to the longitudinal direction is not necessary. Any configuration is possible provided that the protrusions 10 extend along a direction that crosses the longitudinal direction of the base material 2.

Additionally, another film-like nonwoven fabric (hereinafter referred to as "nonwoven fabric film" (not illustrated)) may be further laminated on the surface of the protrusions 10. The nonwoven fabric film is a thin film member that adjusts airflow resistance of the sound absorbing structure 1 and has functions for changing the sound absorption characteristics. Melt blown fiber, for example, may be used for the nonwoven fabric film. The airflow resistance can be controlled further by compressing the nonwoven fabric film by heating or pressure. Additionally, it is possible to adjust the airflow resistance by adhesively fixing the melt blown fibers to each other using a binder fiber by dispersing a binder fiber in the melt blown fiber and melting the binder fiber.

The melt blown fiber is not limited and any melt blown fiber may be used provided that it can be spun into ultrafine fibers via a melt blown method and has a melting point higher than that of the binder fiber. For example, the melt blown fiber can be selected from polyethylene terephthalate (PET), polybutylene terephthalate (PBT), polyethylene 1,4-cyclohexane dimethanol (PCT), polylactic acid (PLA) and/or polypropylene (PP), polyacrylonitrile, polyacetate, polyamide resin, and similar thermoplastic polymers. Of these, PET and PP are preferable from the perspectives of cost and workability. Furthermore, from the perspective of reducing weight, PP, which has a lighter specific gravity, is preferable.

Any fiber, which has a lower melting point on at least the surface than the melting point of the melt blown fiber, may be used as the binder fiber. For example, a binder fiber that has a melting point lower than the melting point of the melt blown fiber by 10°C or greater may be used. Additionally, a binder fiber that has a melting point lower than the melting point of the melt blown fiber by 20°C or greater may be used. Examples of binder fiber that can be used include low melting point polyethylene terephthalate (PET), polypropylene (PP), polyethylene (PE), and the like. For example, in cases where using polybutylene terephthalate (PBT) having a melting point of around 220°C as the melt blown fiber, low melting point polyethylene terephthalate (PET) having a melting point on the surface of 110°C or the like may be used as the binder fiber.

Any fibrous binder fiber may be used and, while the cross-sectional diameter and length thereof are not limited, short fibers can be used to increase dispersibility. For example, staple fiber with a fiber length of about 10 mm to 100 mm, produced by cutting spun fiber, can be used.

The effective fiber diameter (EFD, $\mu$m) can be found using the following formula.

$$EFD = 86.65 \times \{[A1.5 + 1254.37 \times A4.5] \times L\}/\Delta P\}0.5$$

In this formula,
$\Delta P$: Pressure loss (Pa)

$$A = BW/(R{\cdot}L)$$

BW: Sample mass (g)
R: Sample density (g/cc)
L: Sample thickness (mm).

The nonwoven fabric film can be manufactured as follows. First, a web having a weight per unit area of from 50 to 250 g/m$^2$ is formed from the melt blown fiber. Additionally, a portion of the melt blown fiber is replaced and mixed with the binder fiber and the web is formed. In this step, it is possible to use an ordinary melt blown process, and, in cases where mixing the binder fiber, a web in which binder fibers are substantially uniformly dispersed between melt blown fibers is formed by blowing the binder fiber so as to directly merge with the airflow containing the blown melt blown fiber. Note that the binder fiber is spread using, for example, a rotating body such as a Ricken roll or the like, and is blown by highpressure air. Comparatively short fiber can be used to increase the dispersibility of the binder fiber. Additionally, the weight per unit area can be adjusted by adjusting the amount of each fiber blown into high pressure air flow.

It is possible to use the resulting web as-is as the nonwoven fabric film. Additionally, it is possible to use a product, as the nonwoven fabric film, for which airflow resistance has been adjusted by heating at a temperature at which at least the binder fiber melts, and compressing the mixed web by pressurizing from above and below in the thickness direction. The heating method is not limited and a variety of methods can be used including methods using lamps, methods using heaters, and the like. Additionally, a variety of pressurizing methods can be used including methods using press machines, pressure rollers, or the like. A web preheated to a predetermined temperature may be pressurized. The heating temperature satisfies heating conditions whereby the binder fiber melts but the melt blown fiber does not melt. Note that the entirety of the binder fiber need not be melted and, provided that the fiber structure can be adhesively fixed, the binder fiber may be partially melted. In cases where using a binder having a core-sheath structure, a binder fiber for which only the sheath portion melts may be used. Thus, the nonwoven fabric film is obtained. The solidity of the nonwoven fabric film is, for example, from 3% to 20%.

### Examples

The present invention will now be explained in greater detail through the use of examples, but is not limited to the examples given below.

### Preparation of Base Material

A base material was constituted by polyester spunbond fiber. The thickness of the base material was about 0.15 mm. The weight per unit area of the base material was 60 g/m$^2$. Double-sided tape for adhering the base material to the tire was laminated on the back surface of the base material. Additionally, a polyamide hot melt adhesive film for adhering the sheet member to the base material was laminated on the front surface of the base material.

### Preparation of Sheet Member Constituting the Protrusions

Nonwoven fabric webs having the specifications shown in Table 1 were prepared. The pair of blades was pressed against these nonwoven fabric webs from both sides in the thickness direction, and pleating was performed in which creases were formed that alternately repeat. This pleating was performed using a TK-11 (manufactured by Toyo Koki Co., Ltd.) in a manner such that the projecting heights and pitches shown in Table 2 were obtained. Then, using a jig, the gradient angles of the sheet member of each of the valley portions that sandwich the protrusion of one of the protrusions were configured to be substantially equal. The width of the protrusions, that is, the length in the extending direction of the protrusions was set to be about 80 mm. The solidity was 1.8%.

### Preparation of Nonwoven Fabric Film

A nonwoven fabric film was fabricated by dispersing a binder fiber in a melt blown fiber. The melt blown fiber was spun using polypropylene material with an effective fiber diameter of about 6 $\mu$m such that the unit weight was 37.5 g/m$^2$. As the binder fiber, 6.6 decitex "Unitika #4080" was used, for which a melting temperature of the sheath portion of the core-sheath structure was 110°C and the melting temperature of the core portion was 260°C, and the fiber length was set to about 32 mm. The binder fiber was merged and mixed at a unit weight of 12.5 g/m$^2$ with the melt blown fiber. Thus, a nonwoven fabric film with a thickness of 1.5 mm was obtained. The solidity was 3.5%.

**Table 1**

| Nonwoven fabric material | Thickness (mm) | Unit weight (g/m$^2$) | Fiber material |
|---|---|---|---|
| K-1 | 7 | 128 | Polyester |
| K-2 | 12 | 212 | Polyester/acrylonitrile |
| H-1 | 5 | 192 | Polyester |

## Example 1

Protrusions were formed using a sheet member obtained by pleating a nonwoven fabric K-1 such that the projecting height of the protrusions was about 17.3 mm and the pitch of the protrusions was about 20 mm. This sheet member and the base material were bonded via the bonding layer of the base material. Thus, a sound absorbing structure of Example 1 was obtained. This sound absorbing structure was cut at a length in the longitudinal direction of the base material of 1700 mm and one layer thereof was disposed on the inner surface of the pneumatic tire (the back surface of the tread portion) such that the longitudinal direction of the base material followed the circumferential direction of the pneumatic tire. Double-sided tape was used to fix the sound absorbing structure to the inner surface of the pneumatic tire. A pneumatic tire for which a circumferential length of the inner space was about 1500 mm was prepared so that columnar resonance sound generated a maximum sound pressure in the range of 200 to 300 Hz. This pneumatic tire (LeMans 4, manufactured by Dunlop) had a tread width of 195 mm, a rim diameter of 16 inches (about 406.4 mm), and an aspect ratio of 55%.

## Example 2

Protrusions were formed using a sheet member obtained by pleating the nonwoven fabric K-1 such that the projecting height of the protrusions was about 25.9 mm and the pitch of the protrusions was about 30 mm. This sheet member and the base material were bonded via the bonding layer of the base material. Thus, a sound absorbing structure of Example 2 was obtained. This sound absorbing structure was disposed on the inner surface of the pneumatic tire in the same manner as Example 1.

## Example 3

Protrusions were formed using a sheet member obtained by pleating a nonwoven fabric K-2 such that the projecting height of the protrusions was about 17.3 mm and the pitch of the protrusions was about 20 mm. This sheet member and the base material were bonded via the bonding layer of the base material. Thus, a sound absorbing structure of Example 3 was obtained. This sound absorbing structure was disposed on the inner surface of the pneumatic tire in the same manner as Example 1.

## Example 4

Protrusions were formed using a sheet member obtained by pleating the nonwoven fabric K-2 such that the projecting height of the protrusions was about 25.9 mm and the pitch of the protrusions was about 30 mm. This sheet member and the base material were bonded via the bonding layer of the base material. Thus, a sound absorbing structure of Example 4 was obtained. This sound absorbing structure was disposed on the inner surface of the pneumatic tire in the same manner as Example 1.

## Example 5

Protrusions were formed using a sheet member obtained by pleating a nonwoven fabric H-2 such that the projecting height of the protrusions was about 17.3 mm and the pitch of the protrusions was about 20 mm. This sheet member and the base material were bonded via the bonding layer of the base material. Thus, a sound absorbing structure of Example 5 was obtained. This sound absorbing structure was disposed on the inner surface of the pneumatic tire in the same manner as Example 1.

**Example 6**

Protrusions were formed using a product obtained by laminating two layers of a nonwoven fabric film on a sheet member obtained by pleating the nonwoven fabric K-1 such that the projecting height of the protrusions was about 25.9 mm and the pitch of the protrusions was about 30 mm. The nonwoven fabric film was layered on the side of the sheet member opposite the hollow portion. This sheet member and the base material were bonded via the bonding layer of the base material. Thus, a sound absorbing structure of Example 6 was obtained. This sound absorbing structure was disposed on the inner surface of the pneumatic tire in the same manner as Example 1.

**Comparative Example 1**

The sheet-like nonwoven fabric K-1 not subjected to pleating was disposed on the inner surface of the pneumatic tire in the same manner as in Example 1, such that the longitudinal direction of the base material followed the circumferential direction of the pneumatic tire.

**Comparative Example 2**

The sheet-like nonwoven fabric K-2 not subjected to pleating was disposed on the inner surface of the pneumatic tire in the same manner as in Example 1, such that the longitudinal direction of the base material followed the circumferential direction of the pneumatic tire.

**Measurement of Sound Pressure of Column Resonance Sound**

Using acrylic foam tape, a plate member made from natural rubber and having a thickness of 2 mm was affixed to the pair of bead portions of a pneumatic tire. Thus, the inner space of the pneumatic tire was closed. A pair of holes was opened in the plate member of the pneumatic tire at positions opposite sides in the circumferential direction, and a noise source and a microphone were inserted through each of these holes into the inner space. Then, the gaps of the holes were filled with clay and the sound pressure of the column resonance sound was measured. An OmniSource loudspeaker (type 4295, manufactured by Brüel & Kjær) was used as the noise source. Omnidirectional white noise was input as the noise source from low frequency to high frequency at the same sound pressure level (-40 dBA). A 1/2 inch free field microphone (type 4189-A021, manufactured by Brüel & Kjær) was used as the microphone. The measured sound was analyzed using an FFT and CPB analyzer (Pulse Lab Shop, manufactured by Brüel & Kjær) and the maximum sound pressure of the column resonance sound having a peak in the range of 200 to 300 Hz was found. The measurement results are shown in Table 2.

**Table 2**

| Sound absorbing structure | Nonwoven fabric | Width (mm) | Projecting height (A) (mm) | Pitch (B) (mm) | Maximum sound pressure (dB) at 200 to 300 Hz |
|---|---|---|---|---|---|
| Example 1 | K-1 | 80 | 20 | 20 | 90.3 |
| Example 2 | K-1 | 80 | 30 | 30 | 89.9 |
| Example 3 | K-2 | 80 | 20 | 20 | 88.7 |
| Example 4 | K-2 | 80 | 30 | 30 | 88.5 |
| Example 5 | H-1 | 80 | 20 | 20 | 89.3 |
| Example 6 | K-1 + Nonwoven fabric film | 80 | 30 | 30 | 89.0 |
| Comparative Example 1 | K-1 (sheet-like) | 80 | Thickness: 7 mm | | 92.6 |
| Comparative Example 2 | K-2 (sheet-like) | 80 | Thickness: 12 mm | | 91.4 |

As shown in Table 2, compared to the pneumatic tires in which the sound absorbing structures of Comparative Examples 1 and 2 are disposed, the pneumatic tires in which the sound absorbing structures of Examples 1 to 6 were disposed had smaller maximum sound pressures of column resonance sound having a peak in the range of 200 to 300 Hz. Additionally, compared to the pneumatic tires in which the sound absorbing structures of Examples 1 and 2 were disposed, the pneumatic tires in which the sound absorbing structures of Examples 3 and 4 were disposed had even smaller maximum sound pressures of column resonance sound having a peak in the range of 200 to 300 Hz. As such, it has been confirmed that column resonance sound of certain frequencies (the range of 200 to 300 Hz) can be reduced with the sound absorbing structures of Examples 1 to 6.

**Claims**

1. A sound absorbing structure (1) for being disposed in an interior of a pneumatic tire (30), the sound absorbing structure comprising:

   a sheet-like base material (2);
   a sheet member (3) made from a nonwoven fabric and having a folded, pleated form providing peak and valley portions alternatively repeating along a longitudinal direction of the base material, said peak portions defining a plurality of protrusions (10) forming a bellows shape and projecting from a front surface (2a) of the base material; and
   a hollow portion (20) provided inside of the protrusions,
   wherein each of the protrusions has a ridge line (13) of the respective peak portion and said ridge line has a sharp crease form.

2. The sound absorbing structure (1) according to claim 1, wherein each of the valley portions (12) has valley line (14) and said valley line has a sharp crease form.

3. The sound absorbing structure (1) according to claim 1 or 2, wherein:
   the base material (2) is elongated;

   the protrusions (10) extend along a crossing direction (Y; T) crossing the longitudinal direction (X) of the base material;
   the plurality of protrusions (10) are juxtaposed along the longitudinal direction of the base material; and
   the hollow portion (20) extends along the crossing direction (Y; T) inside each of the plurality of protrusions.

4. The sound absorbing structure (1) according to any one of claim 1 to 3, wherein (a) the sound absorbing structure (1) is in the form of a corrugated structure, (b) the hollow portion (20) provided inside each of the plurality of protrusions (10) is space formed by the front surface (2a) of the base material (2) and the sheet member (3) constituting the protrusion, or (c) both (a) and (b).

5. The sound absorbing structure (1) according to any one of claims 1 to 4, wherein (a) a projecting height of the protrusions (10) from the front surface (2a) of the base material (2) is in the range of from about 1 mm to about 50 mm, (b) a width dimension of the protrusions along the front surface of the base material is in the range of from about 3 mm to about 100 mm, or (c) both (a) and (b).

6. A pneumatic tire (30) comprising:
   a sound absorbing structure (1) according to any one of claims 1 to 5 disposed on an inner surface (34) of the pneumatic tire.

7. The pneumatic tire (30) according to claim 6, wherein the sound absorbing structure (1) is in the form of a corrugated structure.

8. The pneumatic tire (30) according to claim 6 or 7, wherein the base material (2) of the sound absorbing structure (1) is elongated and disposed on the inner surface (34) of the pneumatic tire such that a longitudinal direction (X) of the base material follows a circumferential direction (U) of the pneumatic tire, the protrusions (10) extend along a crossing direction (Y; T) crossing a longitudinal direction of the base material, the plurality of protrusions are juxtaposed along the longitudinal direction of the base material, and the hollow portion (20) inside each of the plurality of protrusions extends along the crossing direction.

9. A wheel comprising:

a rim; and
the pneumatic tire (30) according to any one of claims 6 to 8 mounted on the rim.

10. A method of absorbing sound from a pneumatic tire (30), said method comprising:
disposing the sound absorbing structure (1) according to any one of claims 1 to 5 inside of a pneumatic tire.

11. The method according to claim 10 further comprising:
mounting the pneumatic tire (30) onto a rim, after the sound absorbing structure (1) is disposed inside the pneumatic tire, to form a wheel.

12. The method according to claim 11 further comprising:
mounting the wheel onto a vehicle.

13. The method according to claim 12, wherein the vehicle is an automobile.

14. The method according to claim 13, wherein the automobile is a passenger car, a bus, a truck, a mobile home, or a trailer.


**Patentansprüche**

1. Eine schallabsorbierende Struktur (1) zum Anordnen in einem Inneren eines Luftreifens (30), wobei die schallabsorbierende Struktur Folgendes umfasst:

ein bahnartiges Basismaterial (2);
ein Bahnelement (3), das aus einem Vliesstoff hergestellt ist und eine gefaltete, plissierte Form aufweist, die Spitzen- und Talabschnitte bereitstellt, die sich abwechselnd entlang einer Längsrichtung des Basismaterials wiederholen, wobei die Spitzenabschnitte eine Mehrzahl von Vorsprüngen (10) definieren, die eine Balgform bildet und von einer vorderen Oberfläche (2a) des Basismaterials vorsteht; und
einen hohlen Abschnitt (20), der innerhalb der Vorsprünge bereitgestellt ist,
wobei jeder der Vorsprünge eine Kammlinie (13) des jeweiligen Spitzenabschnitts aufweist und die Kammlinie eine scharfe Knickform aufweist.

2. Die schallabsorbierende Struktur (1) nach Anspruch 1, wobei jeder der Talabschnitte (12) eine Tallinie (14) aufweist und die Tallinie eine scharfe Knickform aufweist.

3. Die schallabsorbierende Struktur (1) nach Anspruch 1 oder 2, wobei: das Basismaterial (2) länglich ist;
sich die Vorsprünge (10) entlang einer Querrichtung (Y; T) die Längsrichtung (X) des Basismaterials kreuzend erstrecken;
die Mehrzahl von Vorsprüngen (10) entlang der Längsrichtung des Basismaterials nebeneinander angeordnet ist; und
sich der hohle Abschnitt (20) entlang der Querrichtung (Y; T) innerhalb jedes der Mehrzahl von Vorsprüngen erstreckt.

4. Die schallabsorbierende Struktur (1) nach einem der Ansprüche 1 bis 3, wobei (a) die schallabsorbierende Struktur (1) in Form einer gewellten Struktur vorliegt, (b) der hohle Abschnitt (20), der innerhalb jedes der Mehrzahl von Vorsprüngen (10) bereitgestellt ist, ein Raum ist, der durch die vordere Oberfläche (2a) des Basismaterials (2) gebildet ist und das Bahnelement (3) den Vorsprung bildet, oder (c) sowohl (a) als auch (b).

5. Die schallabsorbierende Struktur (1) nach einem der Ansprüche 1 bis 4, wobei (a) eine vorstehende Höhe der Vorsprünge (10) von der vorderen Oberfläche (2a) des Basismaterials (2) im Bereich von etwa 1 mm bis etwa 50 mm liegt, (b) eine Breitenabmessung der Vorsprünge entlang der vorderen Oberfläche des Basismaterials im Bereich von etwa 3 mm bis etwa 100 mm liegt, oder (c) sowohl (a) als auch (b).

6. Ein Luftreifen (30), umfassend:
eine schallabsorbierende Struktur (1) nach einem der Ansprüche 1 bis 5, die auf einer inneren Oberfläche (34) des Luftreifens angeordnet ist.

7. Der Luftreifen (30) nach Anspruch 6, wobei die schallabsorbierende Struktur (1) in Form einer gewellten Struktur vorliegt.

8. Der Luftreifen (30) nach Anspruch 6 oder 7, wobei das Basismaterial (2) der schallabsorbierenden Struktur (1) länglich ist und auf der inneren Oberfläche (34) des Luftreifens derart angeordnet ist, dass eine Längsrichtung (X) des Basismaterials einer Umfangsrichtung (U) des Luftreifens folgt, wobei sich die Vorsprünge (10) entlang einer Querrichtung (Y; T) eine Längsrichtung des Basismaterials kreuzend erstrecken, wobei die Mehrzahl von Vorsprüngen entlang der Längsrichtung des Basismaterials nebeneinander angeordnet sind und sich der hohle Abschnitt (20) innerhalb jedes der Mehrzahl von Vorsprüngen entlang der Querrichtung erstreckt.

9. Ein Rad, umfassend:

eine Felge; und
den Luftreifen (30) nach einem der Ansprüche 6 bis 8, der auf der Felge montiert ist.

10. Ein Verfahren zum Absorbieren von Schall von einem Luftreifen (30), wobei das Verfahren umfasst: Anordnen der schallabsorbierenden Struktur (1) nach einem der Ansprüche 1 bis 5 innerhalb eines Luftreifens.

11. Das Verfahren nach Anspruch 10, ferner umfassend:
Montieren des Luftreifens (30) auf einer Felge, nachdem die schallabsorbierende Struktur (1) innerhalb des Luftreifens angeordnet wurde, um ein Rad zu bilden.

12. Das Verfahren nach Anspruch 11, ferner umfassend:
Montieren des Rads an einem Fahrzeug.

13. Das Verfahren nach Anspruch 12, wobei das Fahrzeug ein Automobil ist.

14. Das Verfahren nach Anspruch 13, wobei das Automobil ein Personenkraftwagen, ein Bus, ein Lastkraftwagen, ein Wohnmobil oder ein Anhänger ist.

## Revendications

1. Structure d'absorption sonore (1) destinée à être disposée à l'intérieur d'un bandage pneumatique (30), la structure d'absorption sonore comprenant :

un matériau de base de type feuille (2) ;
un élément de feuille (3) réalisé à partir d'un tissu non tissé et présentant une forme pliée, plissée fournissant des parties de crête et de creux se répétant alternativement le long d'une direction longitudinale du matériau de base, lesdites parties de crête définissant une pluralité de saillies (10) formant une forme de soufflet et faisant saillie à partir d'une surface avant (2a) du matériau de base ; et
une partie creuse (20) prévue à l'intérieur des saillies,
dans laquelle chacune des saillies présente une ligne de nervure (13) de la partie de crête respective et ladite ligne de nervure présente une forme de pli pointu.

2. Structure d'absorption sonore (1) selon la revendication 1, dans laquelle chacune des parties de creux (12) présente une ligne de creux (14) et ladite ligne de creux présente une forme de pli pointu.

3. Structure d'absorption sonore (1) selon la revendication 1 ou 2, dans laquelle : le matériau de base (2) est allongé ;
les saillies (10) s'étendent le long d'une direction de croisement (Y ; T) croisant la direction longitudinale (X) du matériau de base ;
la pluralité de saillies (10) sont juxtaposées le long de la direction longitudinale du matériau de base ; et
la partie creuse (20) s'étend le long de la direction de croisement (Y ; T) à l'intérieur de chacune de la pluralité de saillies.

4. Structure d'absorption sonore (1) selon l'une quelconque des revendications 1 à 3, dans laquelle (a) la structure d'absorption sonore (1) a la forme d'une structure ondulée, (b) la partie creuse (20) ménagée à l'intérieur de chacune de la pluralité de saillies (10) est un espace formé par la surface avant (2a) du matériau de base (2) et l'élément de feuille (3) constituant la saillie, ou (c) à la fois (a) et (b).

**5.** Structure d'absorption sonore (1) selon l'une quelconque des revendications 1 à 4, dans laquelle (a) une hauteur en saillie des saillies (10) de la surface avant (2a) du matériau de base (2) est dans la plage d'environ 1 mm à environ 50 mm, (b) une dimension de la largeur des saillies le long de la surface avant du matériau de base est dans la plage d'environ 3 mm à environ 100 mm, ou (c) à la fois (a) et (b).

**6.** Bandage pneumatique (30) comprenant :
une structure d'absorption sonore (1) selon l'une quelconque des revendications 1 à 5 disposée sur une surface interne (34) du bandage pneumatique.

**7.** Bandage pneumatique (30) selon la revendication 6, dans lequel la structure d'absorption sonore (1) est sous la forme d'une structure ondulée.

**8.** Bandage pneumatique (30) selon la revendication 6 ou 7, dans lequel le matériau de base (2) de la structure d'absorption sonore (1) est allongé et disposé sur la surface interne (34) du bandage pneumatique de sorte qu'une direction longitudinale (X) du matériau de base suive une direction circonférentielle (U) du bandage pneumatique, les saillies (10) s'étendent le long d'une direction de croisement (Y ; T) croisant une direction longitudinale du matériau de base, la pluralité de saillies sont juxtaposées le long de la direction longitudinale du matériau de base, et la partie creuse (20) à l'intérieur de chacune de la pluralité de saillies s'étend le long de la direction de croisement.

**9.** Roue comprenant :

une jante ; et
le bandage pneumatique (30) selon l'une quelconque des revendications 6 à 8 monté sur la jante.

**10.** Procédé d'absorption du son à partir d'un bandage pneumatique (30), ledit procédé comprenant :
la disposition de la structure d'absorption sonore (1) selon l'une quelconque des revendications 1 à 5 à l'intérieur d'un bandage pneumatique.

**11.** Procédé selon la revendication 10 comprenant en outre :
le montage du bandage pneumatique (30) sur un rebord, après que la structure d'absorption sonore (1) a été disposée à l'intérieur du bandage pneumatique, pour former une roue.

**12.** Procédé selon la revendication 11 comprenant en outre :
le montage de la roue sur un véhicule.

**13.** Procédé selon la revendication 12, dans lequel le véhicule est une automobile.

**14.** Procédé selon la revendication 13, dans lequel l'automobile est une voiture de tourisme, un bus, un camion, une caravane, ou une remorque.

FIG. 1

*FIG. 2*

*FIG. 3*

1A

10  13   10  13   10  13   10  13

3A

12A   12A   12A

20   20   20   20

A

2a  2   15A   15A   15A

Z

Y⊙ ──→X

S

*FIG. 4A*

1B

10  13   10  13   10  13   10  13

3B

12,14   12A   12,14   12A

20   20   20   20

A

2a  2   15   15A   15   15A

Z

Y⊙ ──→X

S

*FIG. 4B*

*FIG. 5A*

*FIG. 5B*

*FIG. 6A*

*FIG. 6B*

1G

10E    10E    10E    10E

3G

12B    12B    12B

20    20    20    20

A

2a  2    15A    15A    15A

Z
X
Y
S

*FIG. 7A*

1H

10E    10E

3H

10F    10F

12B    12B    12B

20    20    20    20

A2

A1

2a  2    15A    15A    15A

B

Z
X
Y
S

*FIG. 7B*

*FIG. 8A*

*FIG. 8B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009137568 A
- US 20060157180 A
- EP 2302620 A
- US 4118531 A

**Non-patent literature cited in the description**

- **DAVIES, C.N.** *The Separation of Airborne Dust and Particles, Institution of Mechanical Engineers, London, Proceedings 1B,* 1952